(19)

**Europäisches Patentamt**

**European Patent Office**

**Office européen des brevets**

(11) Veröffentlichungsnummer: **0 286 646**
**B1**

(12) **EUROPÄISCHE PATENTSCHRIFT**

(45) Veröffentlichungstag der Patentschrift: **03.10.90**

(51) Int. Cl.⁵: **F 02 D 41/40,** F 02 D 41/28

(21) Anmeldenummer: **87904499.8**

(22) Anmeldetag: **15.07.87**

(86) Internationale Anmeldenummer:
**PCT/DE87/00316**

(87) Internationale Veröffentlichungsnummer:
**WO 88/02812 21.04.88 Gazette 88/09**

(54) **EINRICHTUNG ZUR ERFASSUNG VON EINGANGSSIGNALEN EINES STEUERGERÄTES IN EINER BRENNKRAFTMASCHINE.**

(30) Priorität: **10.10.86 DE 3634583**

(43) Veröffentlichungstag der Anmeldung:
**19.10.88 Patentblatt 88/42**

(45) Bekanntmachung des Hinweises auf die Patenterteilung:
**03.10.90 Patentblatt 90/40**

(84) Benannte Vertragsstaaten:
**DE FR GB**

(56) Entgegenhaltungen:
**EP-A-0 152 288**
**FR-A-2 392 438**
**GB-A-2 027 944**
**US-A-4 255 789**
**US-A-4 572 130**

(73) Patentinhaber: **ROBERT BOSCH GMBH**
**Postfach 50**
**D-7000 Stuttgart 1 (DE)**

(72) Erfinder: **KARLE, Anton**
**Otto-Hahn-Stra e 5**
**D-7250 Leonberg (DE)**
Erfinder: **PIWONKA, Fridolin**
**Brächterstra e 36**
**D-7146 Tamm (DE)**

Courier Press, Leamington Spa, England.

## Beschreibung

### Stand der Technik

Die Erfindung geht aus von einer Einrichtung zur Erfassung, des Drehzahlsignals einer Brennkraftmaschine. Aus der DE—OS—30 09 627 ist eine Einrichtung bekannt, bei der aus einer Vielzahl von Eingangsgrößen mit Hilfe einer elektronischen Einrichtung eine Vielzahl von Ausgangsgrößen errechnet und bereitgestellt werden. Dabei werden die Eingangsgrößen kontinuierlich erfaßt. Die kontinuierlich erfaßten Eingangsgrößen werden rechnergesteuert in zeitlich konstanten Intervallen abgetastet und zur Berechnung der Ausgangsgrößen herangezogen. Drehzahl und Stellung der Kurbelwelle werden in der bekannten Einrichtung mit Hilfe eines Resolvers erfaßt. Diese Methode de Drehzahlerfassung ist teuer, aufwendig und überaus störanfällig, so daß ihre Verwendung zur Steuerung einer Brennkraftmaschine unbefriedigend ist.

Aus der DE—OS—33 36 028 ist weiterhin eine Einrichtung bekannt, die dem vor allem bei Dieselbrennkraftmaschinen durch endliche Rechenzeiten hervorgerufenen Ruckeln dadurch entgegenwirkt, daß für jeden Zylinder eine gesonderte Regeleinrichtung zur Kraftstoffzumessung vorgesehen ist. Diese Regeleinrichtung kann jedoch nur dann zufriedenstellend arbeiten, wenn den Reglern sehr genaue und aktuelle Drehzahlinformationen zur Verfügung stehen. Im Falle eines Motors mit Z-Zylindern zu ist zu diesem Zweck bei der bekannten Einrichtung auf der Kurbelwelle ein aus Z-Segmenten bestehendes Segmentrad angebracht. Diese Lösung bringt erhebliche Signalerfassungszeiten mit sich, die sich im Zusammenspiel mit der Rechnerlaufzeit ungünstig auf die Dynamik der Regeleinrichtung auswirken können.

Die US—PS 4 572 130 beschreibt ein Verfahren zur zylinderspezifischen Steuerung der Einspritzmenge bei einem Dieselmotor, bei dem Drehzahlschwankungen, die von Verbrennungsvorgängen in den verschiedenen Zynlinderen verursacht werden, erkannt werden und die zylinderspezifische Steuerung der Einspritzmenge so vorgenommen wird, daß einheitliche Drehzahlschwankungen erhalten werden, wodurch sich die Laufruhe des Dieselmotors verbessert. Zur Erkennung der Drehzahlschwankungen wird die Drehzahl durch Abtastung von Inkrementen eines Inkrementgebers ermittelt, wobei die Inkremente biespielsweise einen Abstand von 45 Grad bezogen auf die Kurbelwelle bzw. von 22,5 Grad bezogen auf die Nockenwelle aufweisen. Aus jeweils vier ermittelten Drehzahlwerten wird ein Mittelwert gebildet, der mit dem augenblicklichen Drehzahlwert verglichen wird. Aus dem Vergleichsergebnis wird ein zylinderspezifisches Einspritzmengen-Korrektursignal bestimmt.

Die Aufgabe der Erfindung besteht darin, bei Verwendung eines induktiven oder vergleichbaren Impulsgebers und einer erprobten Sensorik die Drehzahlerfassung zu einem wählbaren Zeitpunkt, vorteilhafterweise zum spätestmöglichen Zeitpunkt vor der nächsten Kraftstoffeinspritzung zu ermöglichen.

### Vorteile der Erfindung

Die erfindungsgemäße Einrichtung mit den Merkmalen des Hauptanspruches hat den Vorteil, daß durch die Verwendung eines Inkrementrades in Verbindung mit einem induktiven Impulsgeber und der erprobten Sensorik eine weniger kostspielige und weniger störanfällige Drehzahlerfassung möglich ist. Durch den geringstmöglichen zeitlichen Abstand zwischen der Erfassung des Drehzahlsignales und der Ausgabe der Ansteuersignale wird die Phasendrehung im Regelkreis minimiert und damit das dynamische Verhalten entscheidend verbessert.

### Zeichnung

Die nachfolgenden Zeichnungen geben ein Ausführungsbeispiel der Erfindung wieder. Figur 1 zeigt ein Blockschaltbild mit den zur Steuerung oder Regelung von Betriebsgrößen der Brennkrakftmaschine notwendigen Elementen. In Figur 2 ist der als Zahnrad ausgebildete Inkrementgeber mit dem zugehörigen Sensor dargestellt. Figur 3 zeigt ein Zeitdiagramm mit Ansteuersignal für ein Magnetventil, Drehzahlsensorsignalen und dem Nockenhub, Figur 4 ein Flußdiagramm des Verfahrens.

### Beschreibung der Erfindung

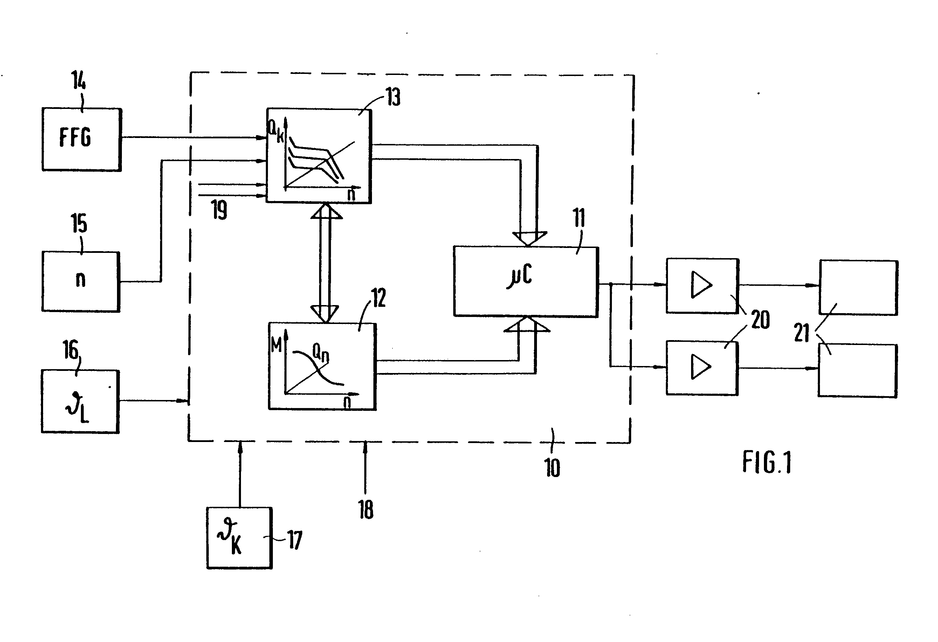

In Figur 1 wird mit 10 ein elektronisches Steuergerät gekennzeichnet, in dem ein mit 13 bezeichnetes Kennfeld für die Bestimmung der Kraftstoffmenge beim Diesel- oder der Grundeinspritzdauer beim Ottomotor, ein mit 12 gekennzeichnetes Kennfeld für Rauchgrenze oder Korrekturgrößen, und ein mit 11 gekennzeichneter Mikrocomputer enthalten sind. Die Kennfelder 12 und 13 können auch über eine Datenleitung miteinander verbunden sein, und stehen aber auch mit dem Mikrocomputer 11 in Verbindung. Vom Steuergerät 10 werden die Signale des Fahrpedalstellungs-Gebers 14, des Drehzahlgebers 15, und der Temperaturgebar 16 und 17 zugeführt. Über die Leitung 18 werden weitere Betriebsparameter dem Steuergerät zugeführt, wie z.B. Ladedruck oder Luftdruck. Der Ausgang des Steuergerätes ist mit verschiedenen Endstufen verbunden, deren Ausgangssignale zur Ansteuerung von Stelleinrichtungen 21 dienen. Die Stelleinrichtungen sind beispielsweise ein Magnetventil an einer Diesel-Kraftstoffpumpe oder Kraftstoffeinspritzdüsen beim Otto-Motor. Die dargestellte Einrichtung arbeitet wie folgt:

Dem Steuergerät 10 werden die Signale des Fahrpedalsstellungs-Gebers 14, des Drehzahlgebers 15, der Temperaturgeber für die Luft bzw. die Kraftstofftemperatur 16 und 17, sowie Signale weiterer Betriebsparameter zugeführt. Das wenigstens zweidimensionale Kennfeld 13 dient dazu, eine den Betriebsparametern der Brennkraftmaschine entsprechende Kraftstoffmenge oder Einspritzdauer zu bestimmen. Im einfach sten Fall dienen dazu die Signale des Fahrpedalstellungs-Gebers und des Drehzahlgebers. Jedoch ist auch hier schon eine Abhängigkeit von mehr als diesen beiden Betriebsparametern denkbar. Das Ausgangssignals des Kennfeldes 13 wird entweder dem Kennfeld 12 zur Korrektur oder aber dem Mikrocomputer 11 direkt zugeführt. Dem Kennfeld 12 wird es beim Dieselmotor vor allem im Vollastbetrieb zugeführt, um aus Gründen der Reinerhaltung der Luft ein zu starkes Rauchen der Brennkraftmaschine zu verhindern. Beim Otto-Motor wird im Kennfeld 12 aus der Grundeinspritzdauer ein den Betriebsbedingungen entsprechender korrigierter Wert ermittelt. Von dort gelangt das Signal dann ebenfalls zum Mikrocomputer 11. Der Mikrocomputer berechnet aus dem Drehzahlsignal und dem Synchronisationsimpuls die zeitliche Lage und die Dauer der Ansteuersignale für die Stelleinrichtungen 21. Diese Ansteuersignale werden den Endstufen 20 zugeführt, die die zur Ansteuerung der Stelleinrichtungen erforderliche Leistung abgeben.

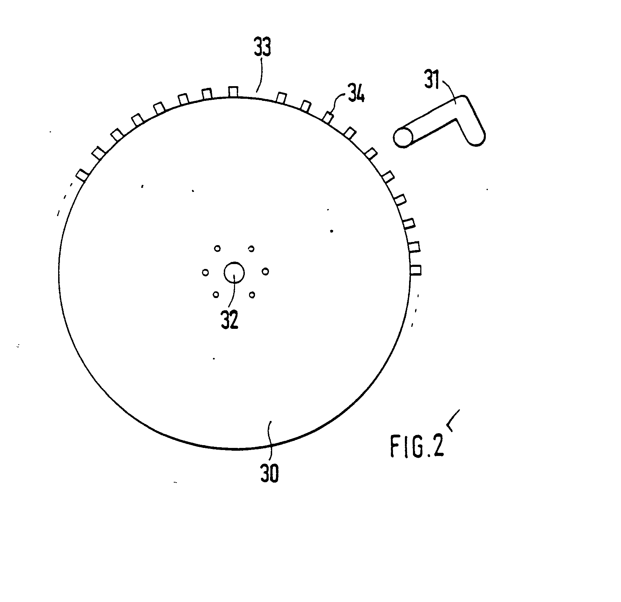

In Figur 2 ist mit 30 ein Inkrementrad gekennzeichnet, mit 31 ein Geber, mit 32 die Kurbelwelle, auf dem das Inkrementrad befestigt ist, mit 33 eine Synchronisationsmarke und mit 34 ein auf dem Inkrementrad angebrachtes einzelnes Inkrement.

Die Synchronisationsmarke dient dazu, dem Steuergerät jede neue Umdrehung der Kurbelwelle anzuzeigen. Es ist auch eine Lösung vorstellbar, bei der das Inkrementrad mit einer der Zahl der Zylinder der Brennkraftmaschine entsprechenden Anzahl, von Synchronisationsmarken versehen ist. Mit Hilfe des Gebers 31, der jedesmal, wenn ein Zahn des Inkrementrad an ihm vorübergeht, einen Impuls abgibt, ist eine hochauflösende Drehzahlerfassung möglich.

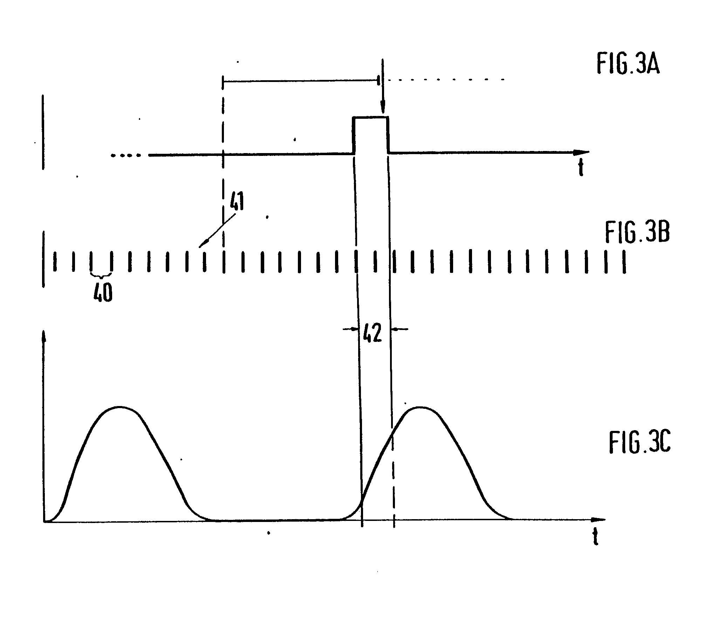

In Figur 3 wird die Anwendung des Verfahrens auf einen Dieselmotor verdeutlicht. Figur 3a zeigt ein Zeitdiagramm, in das der Zeitraum, in dem das elektronische Steuergerät einen Ansteuerimpuls für ein Magnetventil abgibt, eingezeichnet ist. Figur 3b zeigt eine Anzahl der vom Inkrementrad und dem Geber erzeugten Drehzahlimpulse. Bei frühem Spritzbeginn dienen die mit 40 gekennzeichneten Impulse zur Erfassung der Drehzahl, bei spätem Spritzbeginn die mit 41 gekennzeichneten. Figur 3c zeigt ein zu den Figuren a und b gehörendes Diagramm des Nockenhubes über der Zeit. In dem mit 42 gekennzeichneten Zeitintervall fördert die Einspritzpumpe Kraftstoff in die Zylinder Brennkraftmaschine. Das Magnetventil ist im angesteuerten Zustand geschlossen. Zur Förderung dichtet das Magnetventil in dem mit 42 gekennzeichneten Zeitraum den Pumpenraum ab, so daß ein Druck aufgebaut wird.

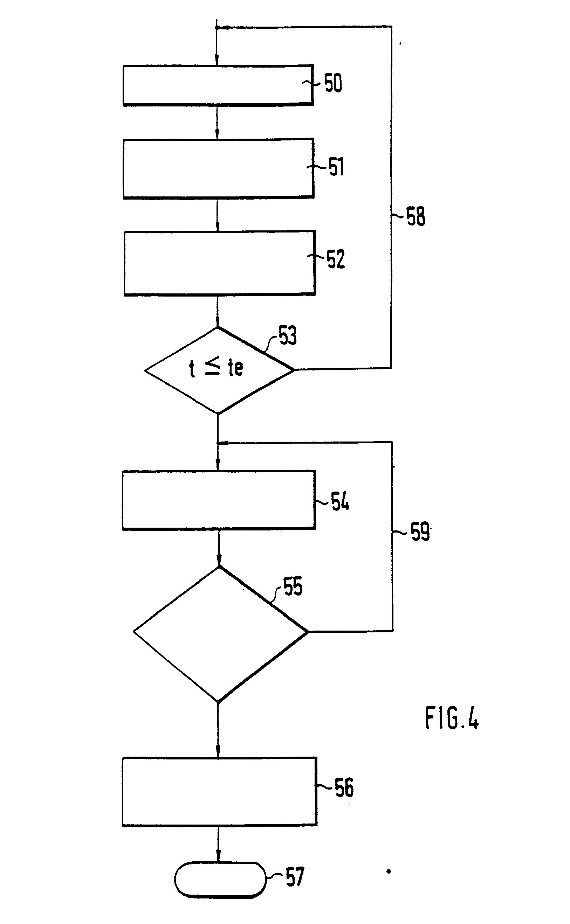

Das in Figur 4 dargetellte Flußdiagramm erläutert das Verfahren am Beispiel der Drehzahlerfassung. Mit Block 50 ist der Verfahrensschritt gekennzeichnet, der zur Ermittlung eines Drehzahlmittelwertes dient. Dieser Drehzahlmittelwert ist beispielsweise aus den letzten Enddrehzahlwerten gebildet. Im Block 51 wird der Zeitpunkt für die nächste Erfassung von Signalen, hier für die nächste Drehzahlerfassung bestimmt. Abhängig von Betriebsparameteren wird in Block 52 ermittelt, aus wievielen Inkrementen des Inkrementrades die Drehzahl berechnet werden soll (Genauigkeit des Wertes). Gleichzeitig kann auch geprüft werden, ob der aktuelle Beriebszustand der Brennkraftmaschine es ermöglicht, auf nicht unbedingt notwendige Kennfeldauswertungen (z.B. Block 12 in Figur 1) im dynamisch kritischen Bereich zu verzichten. Durch diese Maßnahme wird die erforderliche Rechenzeit verkürzt. Im Entscheidungsblock 53 ist zu entscheiden, ob der Zeitpunkt für die Drehzahlerfassung gekommen ist oder nicht. Ist dieser Zeitpunkt noch nicht gekommen, springt das Programm über 58 zum Anfang zurück. Ist der Zeitpunkt erreicht, wird in Block 54 die Drehzahl erfaßt. Besteht dann noch Zeit, das zu berechnende Ausgangssignal oder die Ausgangssignale abzuändern, wird dies in Block 55 entschieden. Sind Änderungen möglich, wird das Drehzahlsignal erneut erfaßt. Sind keine Änderungen mehr möglich, werden die Ausgangssignale berechnet und die entsprechenden Ansteuersignale ausgegeben. Anschließend wird dieser Programmbereich verlassen, und der Rechner steht zur Erfüllung anderer Aufgaben zur Verfügung.

Die Wirkungsweise der Einrichtung ist die folgende:

Der Mikrocomputer 11 bestimmt abhängig vom Mittelwert der Drehzahl und anderern Parametern.

1. die Anzahl der zur Drehzahlbestimmung erforderlichen Inkremente und

2. die relative Lage dieser Inkremente bezogen auf eine Kurbelwellenumdrehung

3. die eventuell zulässige Reduktion der Rechenzeit, durch Weglassen unkritischer Programmteile.

Durch diese drei Freiheitsgrade wird die Summe aus Rechenzeit und Signalerfassungszeit in jedem Falle so kurz gemacht werden, daß Instabilitäten im Regekreis unterbunden werden.

Nach der Freigabe der Ansteuerimpulse steht dem Mikrocomputer noch genügend Zeit zur Berechnung anderer Größen zur Verfügung. Auch ist es denkbar, daß sich Signalerfassung und Signalausgabe überlappen, wenn die Rechengeschwindigkeit des Mikrocomputers eine solche Betriebsart zuläßt. In einem solchen Fall können der Kraftstoffmengenwert oder die Einspritzzeit auf den jeweils aktuellen Stand gebracht werden.

**Patentansprüche**

1. Einrichtung zur Erfassung des Drehzahlsignales einer Brennkraftmaschine, aus dem ein elektronisches Steuergerät zylinderspezifische Ansteuersignale zur Ansteuerung von Stelleinrichtungen erzeugt, mit einem Geber, der ein auf einer umlaufenden Welle befestigtes Inkrementrad abtastet und eine Folge von Impulsen erzeugt, deren zeitlicher Abstand von der Drehzahl abhängt, wobei der Zeitpunkt der Erfassung des Drehzahlsignales bezogen auf eine Umdrehung der Kurbel- und/oder Nochenwelle steuerbar ist und die Drehzahl ausgehend von einem Segment des Inkrementrades ermittelt wird, dadurch gekennzeichnet, daß die Anzahl der das Segement bildenden Inkremente und/oder der Zeitpunkt für die Erfassung des Drehzahlsignales in Abhängigkeit von Mittelwert der Drehzahl festgelegt wird oder der Zeitpunkt in Abhängigkeit von der Last festgelegt wird.

2. Einrichtung nach Anspruch 1, dadurch gekennzeichnet, daß der Zeitpunkt der Erfassung des Drehzahlsignales so gesteuert wird, daß die Zeitspanne zwischen der Erfassung des Drehzahlsignales und der Ausgabe des Ansteuersignales minimal ist.

3. Einrichtung nach Anspruch 1, dadurch gekennzeichnet, daß durch die Wahl einer geeigneten Anzahl von Inkrementen zur Drehzahlerfassung die Rechenzeit minimiert wird.

4. Einrichtung nach einem der vorhergehenden Ansprüche, dadurch gekennzeichnet, daß die Rechenzeit durch Weglassen von Kennfeldauswertungen im dynamisch kristischen Bereich minimiert wird.

5. Einrichtung nach einem oder mehreren der Ansprüche 1 bis 4, dadurch gekennzeichnet, daß aus dem Drehzahlsignal die folgenden Größen oder die Kombination aus den folgenden Größen

Kraftstoffmenge ($Q_K$)
Spritzbeginn (SB) oder
Spritzdauer (SD) berechnet werden.

6. Einrichtung nach einem der vorhergehenden Ansprüche 1 bis 4, dadurch gekennzeichnet, daß aus dem Drehzahlsignal die folgenden Größen oder eine Kombination aus den folgenden Größen

Kraftstoff ($Q_K$)
Regelweg (RW) oder
Position eines mengenbestimmenden Gliedes berechnet werden.

## Revendications

1. Dispositif pour détecter le signal de vitesse de rotation d'un moteur à combustion interne, à partir duquel un appareil électronique de commande produit des signaux de commande spécifiques à un cylindre en vue de commander des moyens de réglage, dispositif comportant un capteur explorant une roue incrémentielle fixée sur un arbe en rotation et produisant une succession d'impulsions, dont l'espacement temporel dépend de la vitesse de vitesse de rotation, l'instant de la détection du signal de vitesse de rotation, relatif à une rotation du vilebrequin ou de l'arbre à cames, pouvant être commandé et la vitesse de rotation étant déterminée à partir d'un segment de la roue incrémentielle, caractérisé en ce que le nombre des incréments formant le segment et/ou l'instant de la détection du signal de vitesse de rotation sont fixés en fonction de la valeur moyenne de la vitesse de rotation ou l'instant est fixé en fonction de la charge.

2. Dispositif selon la revendication 1, caractérisé en ce que l'instant de la détection du signal de vitesse de rotation est commandé de telle façon que l'intervalle de temps entre la détection du signal de vitesse de rotation et la délivrance du signal de commande soit minimal.

3. Dispositif selon la revendication 1, caractérisé en ce que le temps de calcul est minimisé par le choix d'un nombre approprié d'incréments servant à détecter la vitesse de rotation.

4. Dispositif selon l'une des revendications précédentes, caractérisé en ce que le temps de calcul est minimisé par l'abandon des évaluations de champ de caractéristiques situées dans la zone dynamiquement critique.

5. Dispositif selon une ou plusieurs des revendications 1 à 4, caractérisé en ce qu'à partir du signal de vitesse de rotation, on calcule les grandeurs suivantes ou la combinaison des grandeurs suivantes:

débit de carburant ($Q_K$),
début d'injection (SB), ou
durée d'injection (SD).

6. Dispositif selon l'une des revendications précédentes 1 à 4, caractérisé en ce qu'à partir du signal de vitesse de rotation, on calcule les grandeurs suivantes ou une combinaison des grandeurs suivantes:

débit de carburant ($Q_K$),
course de réglage (RW), ou
position d'une organe déterminant le débit.

## Claims

1. Device for detecting the rotational speed signal of an internal combustion engine, from which an electronic control device produces cylinder-specific operating signals for operating adjusting devices, said device comprising a transducer which senses an increment wheel fastened on a rotating shaft and produces a succession of pulses whose spacing in time is dependent on the speed of rotation, while the moment of time of the detection of the rotational speed signal in relation to a rotation of the crankshaft and/or camshaft is controllable and the speed of rotation is determined on the basis of a segment of the increment wheel, characterized in that the number of increments forming the segment and/or the moment of time for the detection of the rotational speed signal is or are determined in dependence on the mean value of the speed of rotation or the moment of time is determined in dependence on the load.

2. Device according to Claim 1, characterized in that the moment of time of the detection of the rotational speed signal is so controlled that the period of time between the detection of the rotational speed signal and the transmission of the operating signal is minimal.

3. Device according to Claim 1, characterized in that the computing time is minimized by selection of a suitable number of increments for the detection of the speed of rotation.

4. Device according to one of the preceding claims, characterized in that the computing time is minimized by omitting characteristic map evaluations in the dynamically critical range.

5. Device according to one or more of Claims 1 to 4, characterized in that from the rotational speed signal the following variables or the combination of the following variables:

amount of fuel ($Q_K$)
commencement of injection (SB) or
duration of injection (SD) are calculated.
6. Device according to one of the preceding Claims 1 to 4, characterized in that from the rotational speed signal the following variables or a combination of the following variables:

fuel ($Q_K$)
control path (RW) or
position of a quantity-determining member are calculated.

FIG.1

FIG.2

FIG.3A

FIG.3B

FIG.3C

EP 0 286 646 B1

FIG.4